(19) **Europäisches Patentamt**

**European Patent Office**

**Office européen des brevets**

(11) Veröffentlichungsnummer : **0 339 327 B1**

(12) **EUROPÄISCHE PATENTSCHRIFT**

(45) Veröffentlichungstag der Patentschrift :
**11.12.91 Patentblatt 91/50**

(21) Anmeldenummer : **89106101.2**

(22) Anmeldetag : **07.04.89**

(51) Int. Cl.⁵ : **A22C 11/08, F01C 21/10**

(54) **Einrichtung zum Fördern pastenartiger Massen.**

(30) Priorität : **27.04.88 DE 8805548 U**

(43) Veröffentlichungstag der Anmeldung :
**02.11.89 Patentblatt 89/44**

(45) Bekanntmachung des Hinweises auf die
Patenterteilung :
**11.12.91 Patentblatt 91/50**

(84) Benannte Vertragsstaaten :
**AT BE CH DE ES FR GB IT LI LU NL SE**

(56) Entgegenhaltungen :
**FR-A- 2 118 490**
**FR-A- 2 205 119**
**US-A- 2 837 762**
**US-A- 2 963 735**

(73) Patentinhaber : **NORDISCHER**
**MASCHINENBAU RUD. BAADER GMBH + CO**
**KG**
**Geniner Strasse 249**
**W-2400 Lübeck (DE)**

(72) Erfinder : **Räther, Siegfried**
**Konrad-Adenauer-Ring 55**
**W-2360 Bad Segeberg (DE)**

**EP 0 339 327 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Flügelzellenpumpe zum Fördern pastenartiger Massen, insbesondere Wurstbrät, beispielsweise zwecks Erzeugung gewichts- und/oder volumengleicher Portionen, umfassend ein eine Pumpenkammer umschließendes Gehäuse mit einer Einlaß- und einer Auslaßöffnung und einen in dem Gehäuse rotierend angetriebenen Pumpenrotor mit radialverschiebbar geführten plattenförmigen Schiebern, welche an den axialen Begrenzungsflächen der Pumpenkammer gleitdichtend anliegend ausgeführt sind und zumindest über einen Teil ihres Umlaufes mit dem Pumpenrotor mit der radialen Innenwand der Pumpenkammer in Kontakt gehalten werden.

Derartige Flügelzellenpumpen sind aus dem Stand der Technik in vielfältigen Ausführungen bekannt.

So sei beispielhaft auf die FR-A 2 205 119 hingewiesen, bei welcher ein mit plattenförmigen Schiebern versehener, ringförmiger Pumpenrotor Anwendung findet, der unter exzentrischer Anordnung in einem zylindrischen Gehäuse umlaufend gelagert ist. Dabei stützen sich die Schieber während ihres Umlaufes einerseits an der Innenwand des Gehäuses und andererseits auf einer zu dem Gehäuse zentrischen, innerhalb des Pumpenrotors angeordneten Hülse ab. Zuführ- und Abgabeöffnung liegen sich mit Anschluß an die sichelförmige Pumpenkammer zwischen der genannten Hülse und dem Innenbereich des ringförmigen Pumpenrotors gegenüber.

Aus der GB-A 1 056 529 ist eine Flügelzellenpumpe eines anderen Konzeptes bekannt. Diese als Füller zum Einfüllen von Wurstbrät in Därme verwendete Einrichtung weist einen in einem Gehäuse exzentrisch gelagerten Pumpenrotor in Form einer angetriebenen Nabe auf, welche mit in dieser radial geführten plattenförmigen Schiebern ausgestattet ist. Die Schieber stützen sich an der Innenwand des Gehäuses ab und werden in einer in eine axiale Abschlußfläche desselben eingearbeiteten Kanalkurve in Kontakt mit der Innenwand gehalten. Während die Einlaßöffnung unter axialer Ausrichtung an die sichtelförmige Pumpenkammer anschließt, ist die Auslaßöffnung tangential angeordnet.

Das überwiegend in der Praxis zur Anwendung kommende Konzept entspricht bezüglich der Lage der Einlaß- und Auslaßöffnung dem der letztbeschriebenen Einrichtung. Dabei zeigen sich insbesondere bei hochviskosen und feuchtigkeitsarmen Brätsorten Schwierigkeiten, eine vollständige Füllung der Pumpenkammer zu erreichen, welcher Umstand dazu führt, daß die Dosiergenauigkeit unbefriedigend ist.

Es ist die Aufgabe der Erfindung, den Füllungsgrad der Pumpenkammer zu verbessern.

Die Lösung dieser Aufgabe macht sich die Erkenntnis zunutze, daß die mangelhafte Füllung vornehmlich in denjenigen Teilen der Pumpenkammer zu beobachten ist, die von der Einlaßöffnung am weitesten abgelegen sind. Das ist insbesondere der Übergangsbereich zwischen der der Einlaßöffnung gegenüberliegenden axialen Begrenzungsfläche der Pumpenkammer und der radialen Innenwand derselben, wobei sich als nachteilig auch zu erkennen gibt, daß dieser Übergangsbereich bauartbedingt durch Aneinandergrenzen fester Wände entsteht.

Zur Verbesserung des Füllungsgrades wird daher vorgeschlagen, den genannten Übergangsbereich mit einer Hohlkehle auszubilden.

Die damit erzielbare Verbesserung des Füllungsgrades beruht insbesondere darauf, daß dieser kritische Teil der Pumpenkammer eine Ausgestaltung erhält, die der sich natürlicherweise aufgrund der Reibungsverhältnisse ergebenden radiusförmigen Fließfront einer fließfähigen Masse angepaßt ist, wenn diese an einer feststehenden Wandung entlanggleitet.

Die Erfindung wird nachstehend anhand eines in der Zeichnung dargestellten Ausführungsbeispiels näher erläutert. Es zeigt.

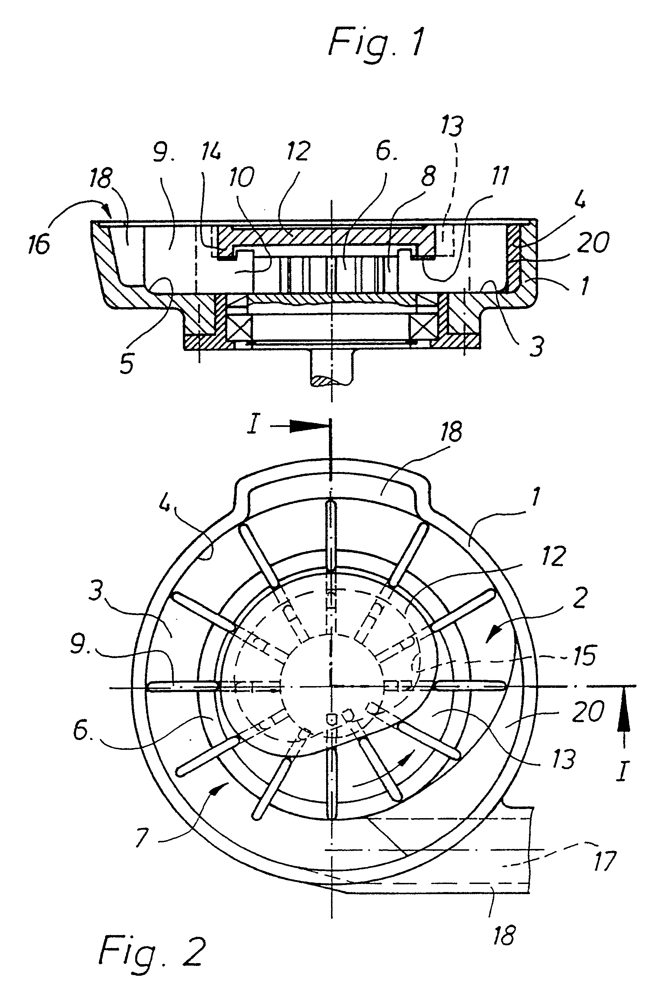

Fig. 1 einen Querschnitt durch die Flügelzellenpumpe längs der Schnittlinie I-I,

Fig. 2 eine Draufsicht auf die erfindungsgemäße Flügelzellenpumpe in vereinfachter Darstellung.

Die Flügelzellenpumpe ist beispielsweise Bestandteil einer nicht dargestellten Fülleinrichtung zum Herstellen von Würsten und wird in geeigneter Weise durch einen ebenfalls nicht gezeigten, vorzugsweise steuerbaren Antrieb, beispielsweise durch einen Schrittmotor angetrieben. Die Flügelzellenpumpe besteht aus einem Pumpengehäuse 1, welches eine Pumpenkammer 2 von topfförmiger Gestalt mit einem Bodenteil 3 und einem Zylinderteil 4 umschließt und durch einen nicht gezeigten Deckel verschließbar ist, so daß ein Hohlraum von der Gestalt einer Zylinderscheibe entsteht. Der Übergangsbereich zwischen dem Bodenteil 3 und dem Zylinderteil 4 wird durch eine Hohlkehle 5 gebildet. In dem Bodenteil 3 des Pumpengehäuses 1 und konzentrisch zu dem Zylinderteil 4 ist ein Pumpenrotor 6 gelagert, der mit einem im wesentlichen zylindrischen Nabenteil 7 die Pumpenkammer 2 zwischen Deckel und Bodenteil 3 unter engem Gleitsitz ausfüllt. Das Nabenteil 7 ist mit in Achsrichtung verlaufenden Radialschlitzen 8 versehen, in welchen plattenförmige Schieber 9 unter leichtem Schiebesitz verschiebbar geführt sind. Die Schieber 9 sind im Bereich eines abgesetzten Teiles 10 mit einer quer verlaufenden Nut 11 versehen, in die eine Steuerkurve 12 eingreift. Diese ist in einer dem Deckel des Pumpengehäuses 1 zuweisenden Eindrehung 13 in dem Pumpenrotor 6 angeordnet und wird mittels geeigneter Fixiermittel verdrehsicher durch den Deckel des Pumpengehäuses 1 fixiert. Die Steuerkurve 12 ist als Kurvenscheibe gestaltet und von einem die Peripherie bildenden Kurvensteg 14 begrenzt, der gleichzeitig eine Innenkurve 15 bildet. Der steuernde Angriff an den Schiebern 9 erfolgt, wie oben erwähnt, durch Eingriff des Kurvensteges 14 in deren jeweilige Nut 11. Das Pumpengehäuse 1 weist eine Einlaßöffnung 16 und eine Auslaßöffnung 17 auf, die sich etwa diametral gegenüberstehen. Die Einlaßöffnung 16 ist dabei als Tasche 18 in dem Zylinderteil 4 des Pumpengehäuses 1 ausgebildet und steht mit einem sich auf dem Deckel desselben aufbauenden Vorratstrichter in Verbindung. Die Auslaßöffnung 17 befindet sich in einem etwa tangential an dem Pumpengehäuse 1 angebrachten Stutzen 19 und durchdringt ein in dem Pumpengehäuse 1 angeordnetes Keilsegment 20, welches sich in dem Zylinderteil 4 im Bereich der Auslaßöffnung 17 und in Drehrichtung des Pumpenrotors 6 vor dieser einschmiegt. Dabei beginnt dieses Keilsegment 20 praktisch schneidenförmig und endet mit einer Anlagefläche an dem Zylinderteil 4 des Pumpenrotors 6.

Der funktionelle Zusammenhang ist folgender : Die in dem nicht gezeigten Vorratstrichter bevorratete Masse, z.B. Wurstbrät, wird durch eine geeignete, in dem Vorratstrichter installierte Stopfeinrichtung in Richtung auf seine Ausgangsöffnung gedrängt. Unterstützt wird dieser Vorgang in bekannter Weise durch Einwirken von Vakuum, welchem die Pumpenkammer 2 unterworfen wird. Diese beiden Maßnahmen bewirken, daß das Wurstbrät in die Tasche 18 des Pumpengehäuses 1 einfließt. Insbesondere bei hochviskosen und feuchtigkeitsarmen Brätsorten bildet sich dabei eine vor allem in der Nähe fester Wandteile radiusförmige Fließfront aus, was seine Ursache darin hat, daß die Reibung zwischen solchen Wandteilen und dem Brät in der Regel größer ist, als die innere Reibung in dem Brät selbst. Infolgedessen wird der Brätstrom an der Wandung des Zylinderteils 4 des Pumpengehäuses 1 gegenüber Kernbereichen des Fließquerschnittes zurückgehalten, so daß solche Kernbereiche den Bodenteil 3 zuerst treffen. Aufgrund der Ausbildung des Übergangsbereiches zwischen diesem und dem Zylinderteil 4 mit der Hohlkehle 4 ist in diesem Augenblick der Gesamtquerschnitt auch in diesem Bereich gefüllt, ohne daß sich die Fließfront umformen muß.

Damit wird insbesondere bei den genannten schwierig verarbeitbaren Bratsorten eine für die Präzision der Dosierung entscheidende sicherere Füllung der Flügelzellenpumpe erreicht, was letzlich auch eine höhere Leistung zu fahren erlaubt.

Der übrige Teil der Kammern zwischen den Schiebern 9 und dem Pumpenrotor 6 füllt sich problemlos, da die jeweiligen Stoßkanten der die Kammern begrenzenden Flächen relativ zueinander bewegt werden, so daß die jeweiligen Fließfronten leicht verformende Kräfte wirksam sind.

Die gefüllten Kammern zwischen den Schiebern 9 verlagern sich nun aufgrund der Drehung des Pumpenrotors 6 in Richtung Auslaßöffnung 17, wobei die Schieber 9 nach und nach aus der Pumpenkammer 3 zurückgezogen werden, so daß sich die Kammern zwischen den Schiebern 9 zu der Auslaßöffnung 17 hin zunehmend vereinen. Kurz vor Erreichen des Keilsegmentes 20 sind die Schieber 9 schließlich soweit zurückgezogen, daß ihre vorher an der Innenwand des Zylinderteils 4 der Pumpenkammer 2 anliegenden, äußeren radialen Begrenzungskanten mit der Umfangsfläche des Pumpenrotors 6 bündig stehen und unter das Keilsegment 20 tauchen können.

Damit wird das Brät insbesondere durch den vor Auslaßöffnung 17 letzten, gegenüber der Innenwand des Zylinderteils 4 dichtenden Schieber 9 der Auslaßöffnung 17 zugeschoben, wobei die durch den Rückzug der Schieber 9 entstehenden definierten Hohlräume aufgrund des dynamischen Gegendrucks in dem Abflußkanal aufgefüllt werden. Es ergibt sich ein pulsationsfreier Füllstrom, praktisch idealer Homogenität.

## Patentansprüche

1. Flügelzellenpumpe zum Fördern pastenartiger Massen, insbesondere Wurstbrät, beispielsweise zwecks Erzeugung gewichts- und/oder volumengleicher Portionen, umfassend ein eine Pumpenkammer (2) umschließendes Gehäuse mit einer Einlaß- (16) und einer Auslaßöffnung (17) und einen in dem Gehäuse rotierend angetriebenen Pumpenrotor (6) mit radialverschiebbar geführten plattenförmigen Schiebern (9) welche an den axialen Begrenzungsflächen der Pumpenkammer (2) gleitdichtend anliegend ausgeführt sind und zumindest über einen Teil ihres Umlaufes mit dem Pumpenrotor (6) mit der radialen Innenwand der Pumpenkammer (2) in Kontakt gehalten werden, **dadurch gekennzeichnet,** daß der Übergangsbereich zwischen mindestens einer der axialen Begrenzungsflächen der Pumpenkammer (2) und der radialen Innenwand derselben durch eine Hohlkehle (5) gebildet wird.

## Claims

1. Vane cell pump for the conveying of paste-like masses, especially sausage meat, for example for the purpose of creating portions equal in weight and/or volume, comprising a housing enclosing a pump chamber (2) and with an inlet opening (16) and an outlet opening (11), and a pump rotor (6) rotationally driven in the housing and with radially displaceably guided plate-like slides (9) which are constructed to be lying slidingly and sealing against the axial boundary surfaces of the pump chamber (2) and which are held by the pump rotor (6) in contact at least over a part of their circumference with the radial inner wall of the pump chamber (2), characterised thereby that the transition region between at least one of the axial boundary surfaces of the pump chamber (2) and the radially inner wall of the same is formed by a hollow (5).

**Revendications**

1. Pompe à cellules semi-rotative destinée au transport de masses de type pâteux, en particulier de chair à saucisse, par exemple pour fabriquer des portions de même poids ou de même volume, comprenant un boîtier, enfermant une chambre de pompe (2) et comportant un orifice d'entrée (16) et un orifice de sortie (17), et un rotor (6) de pompe, entraîné à rotation dans le bottier, pourvu de tiroirs (9) en forme de plaques guidées à coulissement radial qui sont réalisés en prenant appui, de manière étanche au glissement, sur les surfaces axiales de délimitation de la chambre (2) de pompe et qui sont maintenus, au moins sur une partie de leur course avec le rotor (6) de pompe, en contact avec la paroi radiale intérieure de la chambre (2) de pompe, caractérisée en ce que la zone de raccordement entre au moins l'une des surfaces axiales de délimitation de la chambre (2) de pompe et la paroi intérieure radiale de cette dernière est constituée par une gorge (5).

# Fig. 1

# Fig. 2